**Europäisches Patentamt**

**European Patent Office**

**Office européen des brevets**

(11) Veröffentlichungsnummer: **0 154 942**
**B1**

(12) # EUROPÄISCHE PATENTSCHRIFT

(45) Veröffentlichungstag der Patentschrift:
**24.05.89**

(21) Anmeldenummer: **85102595.7**

(22) Anmeldetag: **07.03.85**

(51) Int. Cl.⁴: **B 65 D 71/00,** B 29 C 61/06,
B 29 C 61/08, B 29 C 55/28

(54) **Mehrstückverpackung mit Schrumpffolienumhüllung.**

(30) Priorität: **10.03.84 DE 3408832**

(43) Veröffentlichungstag der Anmeldung:
**18.09.85 Patentblatt 85/38**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**CH-A- 435 690**
**DE-A- 2 100 867**
**US-A- 4 254 869**
**US-A- 4 289 236**

(73) Patentinhaber: **UNILEVER NV, Burgemeester
s'Jacobplein 1 P.O. Box 760, NL-3000 DK Rotterdam
(NL)**

(84) Benannte Vertragsstaaten: **BE CH DE FR IT LI NL SE AT**

(73) Patentinhaber: **UNILEVER PLC, Unilever House
Blackfriars P.O. Box 68, London EC4P 4BQ (GB)**

(84) Benannte Vertragsstaaten: **GB**

(72) Erfinder: **Reinke, Dietmar, Dr., R. Mal. Hastimphilo de
Moura 338 Manacá-Apto. 16a, Portal do Morumbi
BR-05640 Sao Paulo (BR)**
Erfinder: **Schledorn, Martin, Föhrenbergstrasse 7,
D-8551 Kirchehrenbach (DE)**

(74) Vertreter: **Hutzelmann, Gerhard et al, Duracher
Strasse 22, D-8960 Kempten (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Mehrstückverpakkung mit einer äußeren Schrumpffolienumhüllung sowie mehreren darin enthaltenen Teilverpackungen, die ebenfalls mit einer Schrumpffolie umhüllt sind.

Zum Versand werden Kleingebilde im allgemeinen auf Trays gestapelt und mit einer Schrumpffolienumhüllung zusammengehalten und gesichert.

Als Schrumpffolien werden dabei im allgemeinen im Extrusions-Blas-Verfahren hergestellte Polyäthylenfolien verwendet. Beim Aufschrumpfen der äußeren Umhüllung wird jedoch nicht nur diese erweicht, sondern auch die inneren Schrumpffolien, wobei sich ein Verkleben der äußeren mit den inneren Schrumpffolien nicht vermeiden läßt. Auch ein Verkleben der inneren Umhüllungen untereinander kann dabei eintreten.

Um dies zu vermeiden war man gezwungen, die Schrumpffolien der inneren Umhüllung mit einem Trennlack zu beschichten oder auf ihrer Außenseite ein höher schmelzendes Material im Extrusionsverfahren aufzubringen (z. B. US-A-4 254 869 und US-A-4 289 236). Die dadurch verursachten Kosten sind jedoch erheblich.

Der Erfindung liegt die Aufgabe zugrunde, eine Mehrstückverpackung zu schaffen, die eine äußere und eine innere Schrumpffolien-Umhüllung aufweist, die aus unbeschichteten Folien hergestellt sind und bei der keinerlei Verklebungen auftreten.

Diese Aufgabe wird erfindungsgemäß dadurch gelöst, daß die äußere Umhüllung von einer in wenigstens einer Richtung unterhalb ihres Kristallitschmelzpunktes, bzw. innerhalb ihres thermoelastischen Temperaturbereiches gereckten Schrumpffolie hergestellt ist, wogegen die Schrumpffolie der inneren Umhüllung im Extrusions-Blas-Verfahren hergestellt ist.

Die Schrumpftemperatur der äußeren Umhüllung liegt dabei soweit unterhalb der Schrumpftemperatur der inneren Umhüllungen, daß diese beim Schrumpfen der äußeren Folie nicht erweicht werden, so daß keinerlei Verklebung eintritt.

Als sehr vorteilhaft hat sich dabei ein Reckverhältnis für die gereckte äußere Folie von 1 : 1.2 bis 1 : 2 herausgestellt.

Sehr vorteilhaft ist es auch, wenn erfindungsgemäß die Schrumpffolie der äußeren Umhüllung im Extrusions-Blas-Verfahren hergestellt und unterhalb ihres Kristallitschmelzpunktes, bzw. innerhalb ihres thermoelastischen Temperaturbereiches, im flachliegenden Zustand und vorzugsweise in Längsrichtung nachgereckt ist.

Hierdurch ist auch eine äußerst wirtschaftliche Herstellung der äußeren Schrumpffolie gegeben.

Bei einem vorteilhaften Ausführungsbeispiel besteht die innere, im Extrusions-Blas-Verfahren hergestellte Schrumpffolie aus LDPE mit 50 μ Dikke und weist folgende Werte auf:

| Reißfestigkeit | 28 N/mm² | längs |
| | 20 N/mm² | quer |

| Reißdehnung | 450% | längs |
| | 500% | quer |

| Schrumpfbeginn bei etwa | 90 °C | |

| Schrumpfung | 70% | längs |
| | 40% | quer |

Die äußere Schrumpffolie ist ebenfalls im Extrusions-Blas-Verfahren hergestellt und anschließend im flachliegenden Zustand in Längsrichtung gereckt. Sie weist bei einer Dicke von 50 μ folgende Werte auf:

| Reißfestigkeit | 45 N/mm² | längs |
| | 20 N/mm² | quer |

| Reißdehnung | 250% | längs |
| | 700% | quer |

| Schrumpfbeginn bei etwa | 60 °C | |

| Schrumpfung | 90% | längs |
| | 10% | quer |

## Patentansprüche

1. Mehrstückverpackung mit einer äußeren Schrumpffolienumhüllung sowie mehreren darin enthaltenen Teilverpackungen, die ebenfalls mit einer Schrumpffolie umhüllt sind, dadurch gekennzeichnet, daß die äußere Umhüllung von einer in wenigstens einer Richtung unterhalb ihres Kristallitschmelzpunktes bzw. innerhalb ihres thermoelastischen Temperaturbereiches gereckten Schrumpffolie hergestellt, wogegen die Schrumpffolie der inneren Umhüllung im Extrusions-Blas-Verfahren hergestellt ist.

2. Mehrstückverpackung nach Anspruch 1, dadurch gekennzeichnet, daß das Reckverhältnis der gereckten Folie zwischen 1 : 1.2 und 1 : 2 beträgt.

3. Mehrstückverpackung nach Anspruch 1 oder 2, dadurch gekennzeichnet, daß die Schrumpffolie der äußeren Umhüllung im Extrusions-Blas-Verfahren hergestellt und unterhalb ihres Kristallitschmelzpunktes bzw. innerhalb ihres thermoelastischen Temperaturbereiches, im flachliegenden Zustand und vorzugsweise in Längsrichtung nachgereckt ist.

## Claims

1. Multipack with an external shrinkfilm overwrap enclosing a number of packs that are also enclosed by a shrinkfilm overwrap, wherein the external overwrap is produced from a shrinkfilm oriented in at least one direction below its crystal melting point or within its thermoelastic temperature range, while the shrinkfilm used for the internal overwrap is produced by the extrusion-blowing process.

2. Multipack according to claim 1, wherein the orienting ratio of the oriented film is between 1 : 1.2 and 1 : 2.

3. Multipack according to claim 1 or 2, wherein the shrinkfilm of the external overwrap is produced by the extrusion-blowing process and is subsequently oriented – preferably longitudinally – in the flat below its crystal melting point or within its thermoelastic temperature range.

## Revendications

1. Emballage pour plusieurs unités, comprenant un film rétractable formant enveloppe extérieure ainsi que plusieurs emballages partiels contenus dans ce film-enveloppe et également entourés d'un film rétractable, caractérisé par le fait que l'enveloppe extérieure est constituée par un film rétractable étiré au moins dans un sens au-dessous du point de fusion des cristallites ou à l'intérieur de la zone de température thermoélastique, tandis que le film rétractable de l'enveloppe intérieure est confectionné par le procédé d'extrusion-soufflage.

2. Emballage pour plusieurs unités selon la spécification 1, caractérisé par le fait que l'étirabilité du film étiré se situe entre 1 : 1.2 et 1 : 2.

3. Emballage pour plusieurs unités selon la spécification 1 ou 2, caractérisé par le fait que le film rétractable de l'enveloppe extérieure résulte du procédé d'extrusion-soufflage et est reétiré à plat et de préférence dans le sens de la longueur au-dessous du point de fusion de ses cristallites ou à l'intérieur de sa zone de température thermoélastique.